# EUROPEAN PATENT APPLICATION

(11) **EP 1 223 496 A2**
(43) Date of publication of application: **17.07.2002**
(21) Application number: 02250184.5
(22) Date of filing: 11.01.2002
(51) Int. Cl.: G06F 1/00

(54) **Encryption scheme for limiting the maximum number of accesses to a digital file of predetermined content**

(30) Priority: 12.01.2001 US 758242
(71) Applicant: Matsushita Electric Industrial CO., LTD, Kadoma City Osaka 571-8501 (JP)
(72) Inventor: Bhattacharya, Prabir, Plainsboro, New Jersey 08536 (US); Perkins, Gregory M., Pennington, New Jersey 08534 (US)
(74) Representative: Burrington, Alan Graham Headford

(57) **Abstract**

A method and system for providing access to a data file enables predetermination of the number of times the file is accessible. The data file is encrypted with a master key, and one or more dual-encrypted blocks are generated based on a set of secondary keys. The dual-encrypted blocks are contained within the encrypted data file. The method further provides for providing the encrypted data file and an attachment file to an authorized user, where the attachment file enables a device to access the data file content once for each secondary key. The file is accessed by decrypting single-encrypted blocks of the data file with a master key. Dual-encrypted blocks of the data file are decrypted with the master key and a secondary key. The decryption steps are repeated for a set of secondary keys such that the device is able to access the data file content once for each secondary key in the set.

## Description

### BACKGROUND OF THE INVENTION

### Technical Field

The present invention relates generally to digital file distribution. More particularly, the present invention relates to a distribution scheme that allows the access of a digital file a predetermined number of times.

### Discussion

information, in its many forms, has long been an important part of the free market economy. While in the past printed materials represented the lion's share of documented information, in modern times information stored in other forms has grown in popularity. Specifically, with the rapid growth of the Internet, digital files have to a certain extent supplanted printed materials in the marketplace. For example, movies, music, software and news are all available electronically at the click of a mouse. It is therefore easy to understand that the technological focus of many modern businesses has been on the distribution of digital files.

While a number of digital file distribution schemes have been developed, considerable room for improvement remains. For example, one conventional distribution scheme involves transmitting encrypted digital files to authorized users, where the file can only be used once. An encryption key is transmitted, along with the file, to the authorized user, who decrypts the file with the key in order to access it. In some cases, an executable attachment file is also transmitted to the user to control the decryption process. This approach was initially popular because it provided a mechanism for controlling the usage of valuable files. By controlling such use, companies were better able to predict revenues and prevent piracy. As markets have become more complex, however, it has become apparent that one-time distribution schemes may in fact limit revenues.

One example of the undesirability of one-time distribution schemes is the scenario of the movie company-operated server. In this example, the movie company allows the purchaser to download a digital file (e.g., audio or video) that will only play one time on a device such as a computer, or set top box. It is easy to understand that limiting use to one time reduces the desirability of the product (i.e., digital file) to the purchaser on one hand, and may encourage piracy on the other. In other words, if the purchaser desires to view the digital file k-times but can only purchase it for one-time use, it is likely that the purchaser will either not purchase the digital file or will purchase it with the intent of illegally using the file k (or more) times.

Another example is the music company-operated server that allows potential purchasers to sample some of the songs from an artist's CD or DVD (rather than merely providing short clips from selected songs). Once again, one-time sampling may not be desirable to the purchaser. In light of the recent Napster litigation, it is easy to understand the potential for unauthorized use under these circumstances. Another example is the software company-operated server that provides the product with a one-time license which would then install on exactly one machine. It is also easy to understand that organizations purchasing the software and having hundreds, thousands or more user stations would very likely prefer a k-times license agreement over the conventional distribution scheme. In another example, under the conventional approach a magazine or newspaper company could only allow someone to purchase one copy of an article of interest. Yet again it is clear that certain purchasers would prefer the option of purchasing k copies.

Other distribution schemes involve multiple usages, but still fail to address the needs of the emerging economy. One such scheme operates on a timing concept, as in the case of shareware. Thus, the user is given access to the digital file for a predetermined period of time and may use the digital file at will during this time period. It is important to note that this scheme does not involve encryption and is therefore highly susceptible to copying and other piracy activities. It is therefore desirable to provide a method for encrypting a data file that enables access to the data file a predetermined number of times.

The above and other objectives are provided by a method and system for encrypting a data file in accordance with the present invention. The method includes the steps of encrypting the data file with a master key, and generating one or more dual-encrypted blocks based on a set of secondary keys. The dual-encrypted blocks are contained within the encrypted data file. The method further provides for providing the encrypted data file and an attachment file to an authorized user, where the attachment file enables a device to access the data file content once for each secondary key. Thus, the server side of the transaction results in an encrypted data file that is accessible a predetermined number of times.

The present invention also provides a method for enabling a device to access an encrypted data file content, The method includes the step of decrypting single-encrypted blocks of the data file with a master key. Dual-encrypted blocks of the data file are decrypted with the master key and a secondary key. The method further provides for repeating the decryption steps for a set of secondary keys such that the device is able to access the data file content once for each secondary key in the set. Thus, on the client side the encrypted data file represents a file that is accessible a predetermined number of times and is significantly less susceptible to piracy activities than conventional files.

It is to be understood that both the foregoing general description and the following detailed description are merely exemplary of the invention, and are intended to provide an overview or framework for understanding the nature and character of the invention as it is claimed. The accompanying drawings are included to provide a further understanding of the invention, and are incorporated in and constitute part of this specification. The drawings illustrate various features and embodiments of the invention, and together with the description serve to explain the principles and operation of the invention.

### BRIEF DESCRIPTION OF THE DRAWINGS

The various advantages of the present invention will become apparent to one skilled in the art by reading the following specification and appended claims, and by referencing the following drawings in which:
FIG. 1 is a flow diagram demonstrating encryption and decryption of a data file according to the present invention;
FIG. 2 is a flow diagram showing encryption of a data file with a master key according to one embodiment of the present invention;
FIG. 3 is a flow diagram showing encryption of select blocks with secondary keys according to one embodiment of the present invention;
FIG. 4 is a flow diagram showing the generation of dual-encrypted blocks according to one embodiment of the present invention;
FIG. 5 is an alternative flow diagram showing the encryption of a data file in accordance with one embodiment of the present invention;
FIG. 6 is a block diagram demonstrating access of a digital file during a third use in accordance with one embodiment of the present invention;
FIG. 7 is a block diagram demonstration the use of footprint files and footprint data according to one embodiment of the present invention; and
FIG. 8 is a block diagram showing the use of piracy e-mails to prevent unauthorized use of a digital file according to one embodiment of the present invention.

### DETAILED DESCRIPTION OF THE PREFERRED EMBODIMENT

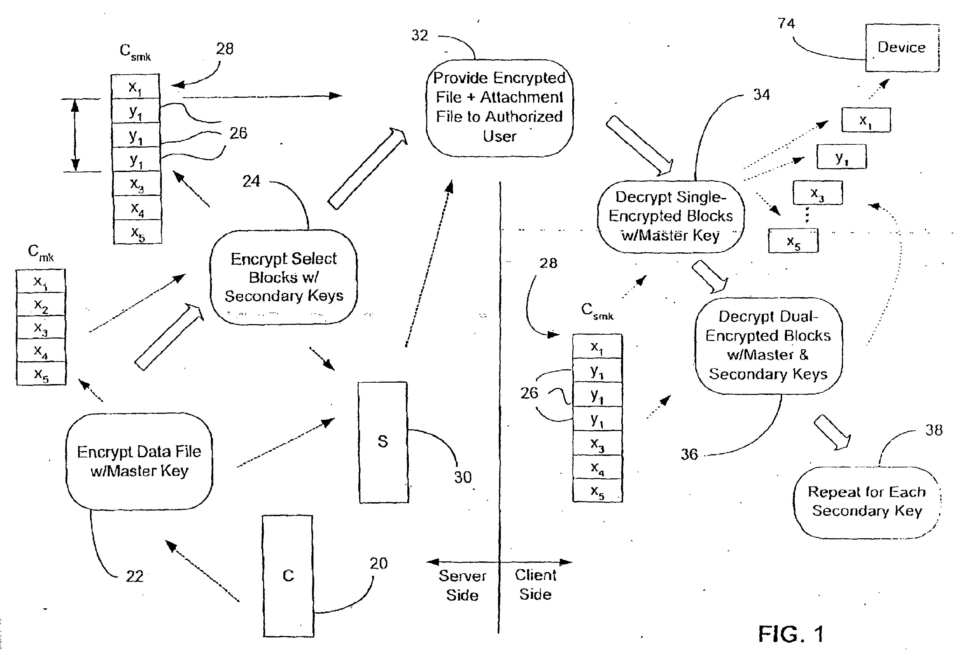

Turning now to FIG. 1, the preferred method for encrypting and decrypting a data file 20 is shown Generally, the provider of the data file 20 engages in the activities is located on the "server side", while the authorized user engages in the activities located on the "client side" of the diagram. The data file 20 can include a wide variety of content including, but not limited to, video, audio, and text content. Likewise, the provider of the data file 20 can be engaged in any number of business activities in which the data file 20 is generated. Nevertheless, the provider of the data file 20 desires to limit the number of times the user can access the data file 20 with a driver 74 (or other device). Thus, in the case of a DVD video file, the provider desires to limit the number of times a DVD player (on the client side) can access the data file 20.

It can generally be seen that the present invention involves encrypting the data file 20 with a master key at step 22. The result is encrypted data file *C*_{*mk*}. One or more dual-encrypted blocks are generated at step 24 based on a set of secondary keys. It can be seen that the dual-encrypted blocks 26 are contained within the final encrypted data file 28 (*C*_{*smk*}). The encrypted data file 28 and an attachment file 30 (*S*) are then provided to an authorized user at step 32, where the attachment file 30 enables a device to access the data file content once for each secondary key.

Once the user receives the encrypted data file 28 and the attachment file 30, the present invention also provides a mechanism for accessing the file content. Generally, at step 34 single-encrypted blocks of the data file are decrypted with a master key. At step 36 dual-encrypted blocks of the data file are decrypted with the master key and a secondary key. The decryption steps are repeated at step 38 for a set of secondary keys such that the device is able to access the data file content once for each secondary key in the set.

### ENCRYPTING THE DATA FILE

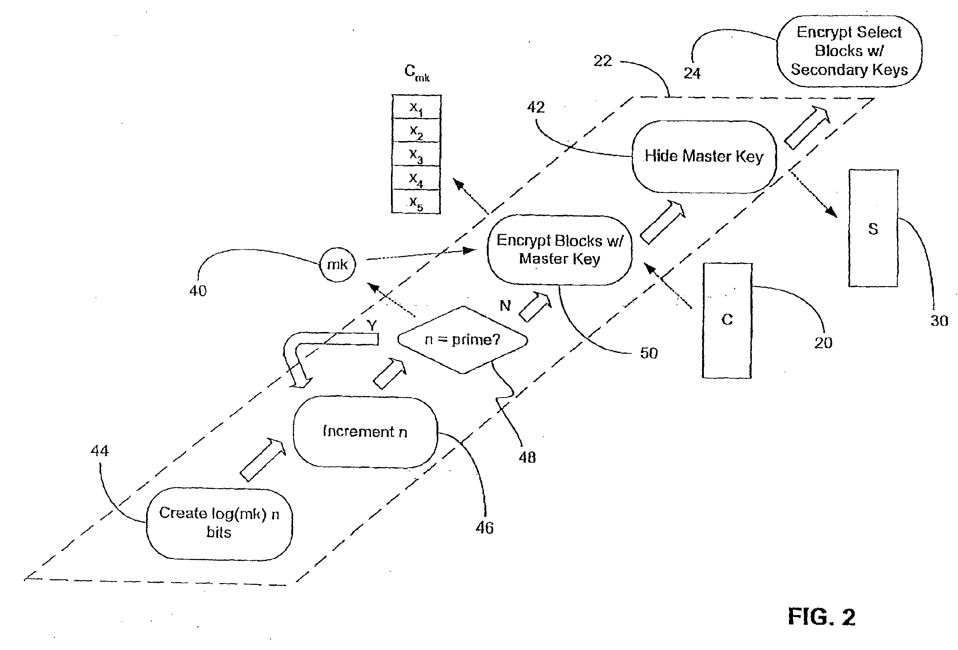

Turning now to FIG. 2, the preferred approach to step 22 is shown. It can be seen that generally the data file 20 is encrypted by randomly generating the master key 40 and hiding the master key 40 within a data structure of the attachment file 30 at step 42. In one embodiment, random generation of the master key 40 is achieved by creating an odd logarithmic bit integer log (*mk*) *n* at step 44. At steps 46 and 48 the integer *n* is incremented by two until a prime number is found. Thus, using the master key 40, the content of the data file 20 can be encrypted on a block-by-block basis at step 50.

It is important to note that the blocks need not be of fixed size. In the case of variable sized blocks, a header defining the block structure could be appended to the front of the file. Furthermore, although under conventional approaches, sometimes two or three blocks may exist in a decrypted state in a device buffer, under the present invention only a single block is ever stored in a decrypted state in the RAM of the PC. This ensures enhanced security of the file content.

With regard to step 42, it will be appreciated that an NP-hard problem is used to hide the master key 40 within the data structure of the attachment file 30. To make a decompilation or static data-flow attack very difficult and to add to the difficulties of a dynamic flow trace attack, we preferably hide the master key in a data structure. In order to use a NP-hard problem to hide the master key 40, let *X* be a set of integers where each *x*_{*1*} ∈ *X* is tagged with a 0 or a 1. Now randomly generate a knapsack of size *m* and use some exact or approximation algorithm to attain a (or exact) solution for the problem. The objects in the solution set and their respective order sorted by size can be used to define key *mk*, either directly or by representing an integer *n* less than *mk* such that no other prime number lies between *n* and *mk*. Thus, the first master key 40 is sent as the data structure that stores the problem and algorithms for finding the solution are included in *S*. For subsequent master keys *mk*ₙₑₓₜ the executable *S* creates the appropriate NP-hard problem whose solution will provide *mk*ₙₑₓₜ.

As a possible extension, *S* can begin with a relatively small NP-hard problem that can be quickly solved. Then, after each iteration of content use, *S* could add to the size of the problem, This would eventually lead to a problem that takes a great amount of computing time to solve. This could not be used to attain exactly *k* uses but would provide an extra level of protection against a hacker who has somehow defeated the "count down" secondary key scheme. After approximately 2*k* uses the content would become unusable because the time to compute the current master key would be too great.

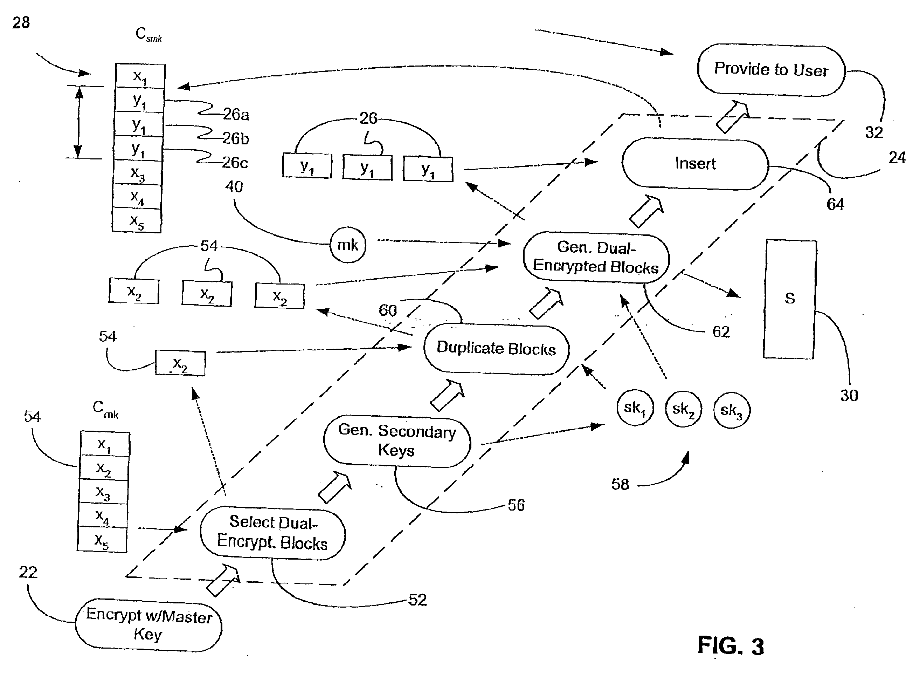

Turning now to FIG. 3, the preferred approach to step 24 is shown in greater detail. Specifically, at step 52 one or more continuous blocks 54 are selected to be dual-encrypted. At step 56 the secondary keys 58 are randomly generated. Note that there is one secondary key for each planned access of the data file content.

At step 60 a duplicate selected block is generated for each secondary key in the set. Thus, dual-encrypted blocks 26 can be generated based on the duplicate selected continuous blocks 54 and the secondary keys 58 at step 62. At step 64 the dual-encrypted blocks 26 are inserted into the encrypted data file 28. It can therefore be seen that former block *x*₂ has now been replaced with dual-encrypted blocks *y*₁, The first time the user accesses the content of the encrypted data file 28, the user will access blocks *x*₁ and *x*₃ - *x*₅ with the master key 40, and the first dual-encrypted block 26a with both the master key 40 and the first secondary key *sk*₁. If the user does not have the first secondary key *sk*₁, the first dual-encrypted block 26a will be inaccessible.

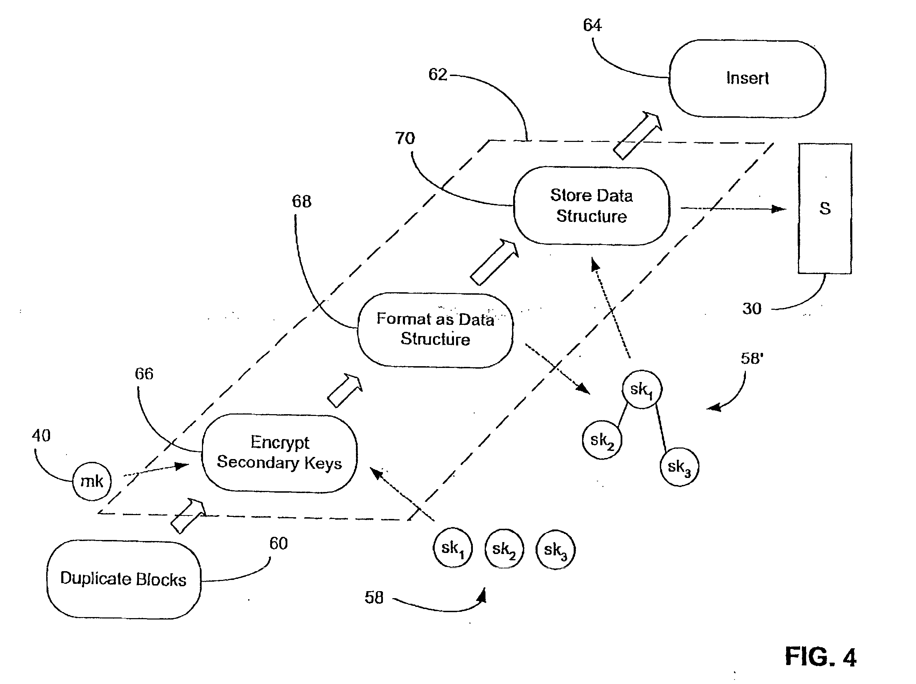

FIG. 4 shows the preferred approach to step 62 (generating dual-encrypted blocks) in greater detail. It can be seen that at step 66 the secondary keys 58 are encrypted with the master key 40. The encrypted secondary keys are then formatted as a data structure 58' at step 68. At step 70 the data structure 58' is stored in the attachment file 30. The above process can be outlined as follows:
(1) Let Y be the set of all chosen continuous subsections of *C*_{*mk*}
(2) Let *y*_{*j*} ∈ *Y* be a continuous subsection of *C*_{*mk*}
(3) Duplicate *y,k* times, *y*¹,...,*y*^{k} and encrypt each *y'* with key *sk*₁ ∈ *SK*
(4) Insert the encrypted copies into *C*_{*mk*}, replacing *y*ᵢ and expanding *C*_{*mk*} as necessary
(5) Repeat until all elements of *Y* have been encrypted
(6) Encrypt *sk*_{*j*} with all secondary keys with prefixes < *j*, starting with key *sk*_{*j*}₋₁ and ending with key *sk*₁
(7) Encrypt key *sk*₁ with master key *mk*
(8) Store the encrypted keys *sk*₁,...,*sk*_{*k*} as a data structure *DS*_{*sk*} and then store *DS*_{*sk*} in *S*
Thus, it can be seen that the secondary keys are encrypted by encrypting the first secondary key with the master key at step (7). Subsequent secondary keys are encrypted with all preceding secondary keys in the set at step (6).

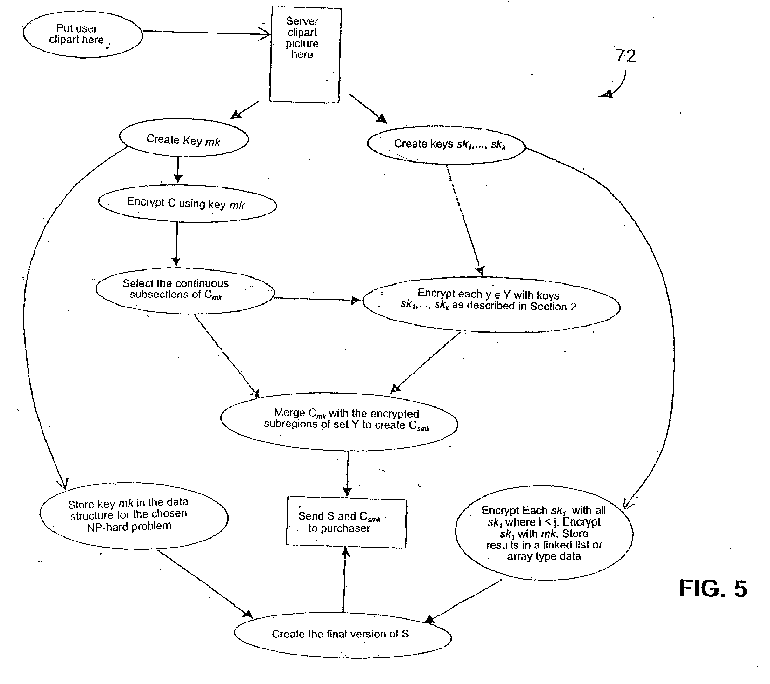

FIG. 5 provides an alternative view of the present invention at 72. In this example, the data file is well known "clip art". It can be seen that the creation of the master key and the secondary keys can be parallel functions resulting in the creation of *S* and *C*_{*smk*}.

### ACCESSING THE DATA FILE

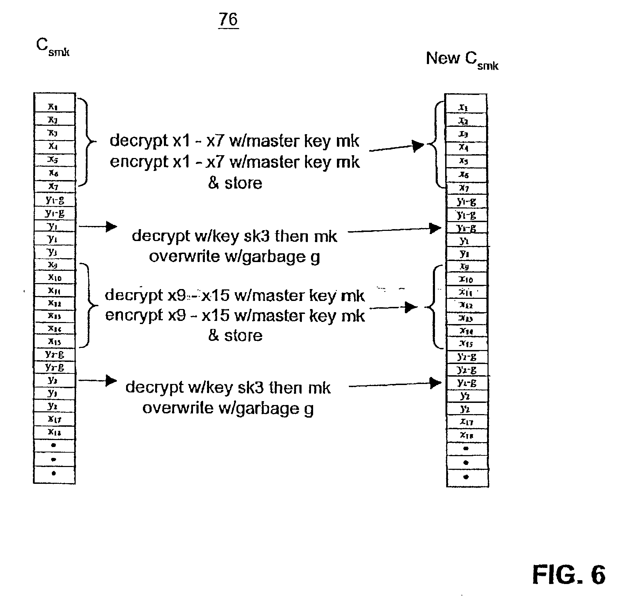

Returning now to FIG. 1, it can be seen that the blocks are decrypted on a block-by-block basis such that the device only has access to the data file content one block at a time. FIG. 6 further illustrates in diagram 76 that after decryption, the blocks are re-encrypted with a new master key. The new master key is generated and hidden in accordance with the techniques discussed above. The present invention further provides for discarding the dual-encrypted blocks after decryption with the secondary keys. It will be appreciated that diagram 76 demonstrates operation of the present invention at a larger scale than the example discussed above. Thus, *C*_{*smk*} is shown as having a larger number of blocks. The concepts, however, are the same.

It is important to note that during decryption care must be taken to never create a completely decrypted version of *C* and to hide the current master and secondary keys *mk* and *sk*_{*j*}. The following outlines the steps taken during decryption where we are processing the *j*^{*th*} use of *C*:
(1) *S* randomly creates a new master key *mk*ₙₑₓₜ (this is performed by randomly selecting an odd integer *n* with log(*mk*) bits and then finding the smallest prime that is larger than *n,* as described above
(2) Using *mk*, decrypt the current secondary key *sk*_{*j*}
(3) Let *Y*={*y*₁,...,*y*_{*m*}} be the subsections of *C*_{*mk*} that were encrypted with the secondary keys *sk*₁,...,*sk*_{*k*} and {*x*₁,...,*x*_{*n*}*}* an ordered partitioning of the bits in *C*_{*mk*} - *Y* where the log(*x*₁)= log(*mk*) (note that *C*_{*mk*} can be padded with extra bits to ensure that log(*x*_{*n*})= log(*mk*))
(4) Starting at the top of *C*_{*smk*}, repeat the following until all of *C*_{*smk*} is processed:
   (a) if the *C*_{*smk*} pointer is pointing to a block of data from set *Y*, then decrypt block *j* of the appropriate *y* ∈ *Y* with key *sk*_{*j*} followed by key *mk*
      else the *C*_{*smk*} pointer points to some *x* ∈ *X*. Decrypt *x* with key *mk*
   (b) Pass the decrypted data along to the appropriate device/driver
   (c) If the decrypted data was from set *Y,* destroy/overwrite block *j* of *y*
      else encrypt *x* with *mk*ₙₑₓₜ to create *x* and store *x* at location *x* in *C*_{*smk*}
(5) Store *mk*_{*next*} as described above
(6) Increment and store counter *j*
(7) Apply the secondary key *sk*_{*j*} to all remaining secondary keys and then encrypt *sk*_{*j*}₊₁ with *mk*_{*next*}

Notice that a new *C*_{*smk*} is created by the above and that this process should always be processed through to completion. Halting *S* during steps (4)-(6) will create a state in which *S* can no longer property decrypt *C*_{*smk*} because *C*_{*smk*} will be in an intermediate state that is partial encrypted with *mk*ₙₑₓₜ. One can easily check for this state, so in the unfortunate case that a user's system crashes during these steps the original content provider could be contacted for a replacement/new ((*k* - *j*)+1 ) - times copy of *C*. Also note that if a hacker were to find and then alter the counter value *j* that *S* would cease to be able to decrypt the continuous subsections of set *Y*. Furthermore, all to none of *C*_{*mk*} can be in set *Y*.

The encryption keys *mk*, *sk*_{*j*} and *mk*_{*next*} are potentially attainable from a debugger trace attack so our scheme includes the use of software tampering methods to hide the keys throughout memory and to periodically determine whether the code is being traced by a debugger. Since *S* resides on the user's machine, this kind of attack is almost unstoppable against an expert hacker. With some of the latest techniques; however, one can test for this attack while *S* is executing and then take appropriate actions (like erasing the content of *C*). Thus, protection of *mk*, *sk*_{*j*} and *mk*ₙₑₓₜ against most users is possible.

Turning now to FIGS, 7 and 8, it can be seen that the present invention provides additional protection against copying and other piracy activities. Note that while the following describes a method for deterring repeated use of copies of *S* and *C*_{*smk'*}, the scenario of a user attaining a copy of the original, decrypted version of *C* does not apply here.

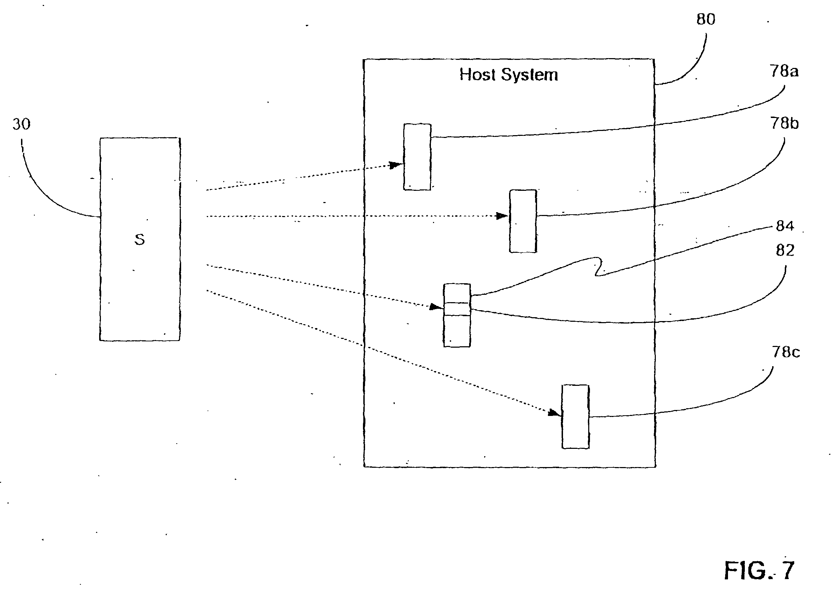

A common attack on the approach described herein would be to simply make a copy of *S* and *C*_{*smk*}. When the current version reaches its *k*^{*th*} use one merely moves on to the next copy. To thwart illegal copies we must add to *S* footprinting and Internet access checks. FIG. 7 demonstrates the preferred footprinting approach. Simply put, footprinting is a standard method that adds files 78 to a host system 80 when an executable attachment file 30 is in use. In our case *S* would add these files 78 and then update them with its current state. To ensure effective footprinting, the hidden files 78 should be scattered about various subdirectories. Furthermore, one can add data 82 to known existing system files 84, a method that is quite difficult for hackers to track (although this does require an extra bit of care when designing *S*). Thus, when *S* is executed it first checks for a footprint which, if found, will cause *S* to know that it is a copy and, consequently, cause *S* to delete itself (or cause some other halting state).

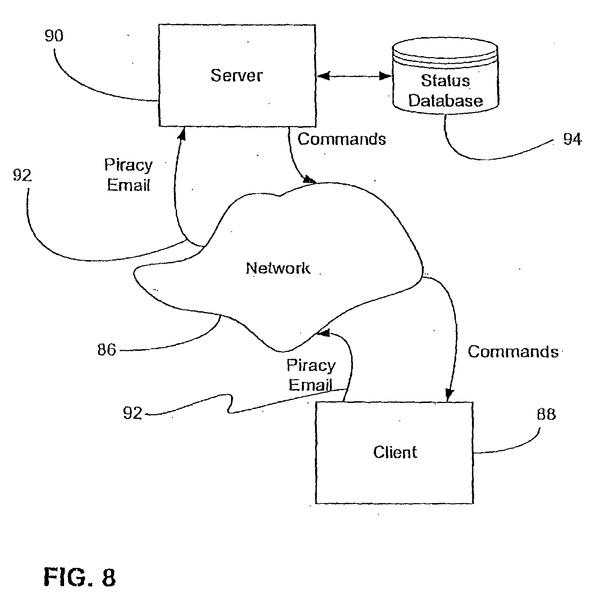

Next, as shown in FIG. 8, we propose to use the Internet 86 (or other type of network) to keep copies from being passed to other machines where no footprints will exist until after the copy has been executed. After footprinting, executable *S* will determine whether the machine 88 (or client) it is executing upon is currently connected to the Internet 86. If a connection is found, then a message 92 will be sent to the specified IP address that relays *S*'s current state and ID. The server 90 can then check a status database 94 to determine whether *S* has already attained the relayed state. If so, the server 90 can take appropriate actions, such as responding to *S* that it is a copy or transmitting various commands. Although we cannot expect that each user with an illegal copy is connected to the Internet 86 at the time of execution, this approach should help deter the copying of *S* and *C*_{*smk*} over the Internet 86. This is important since it is far easier to pass material over the Internet 86 than by hand on a floppy disk, CD or DVD. Furthermore, the trend is for machines to become "always on". Therefore, this should provide adequate copy protection.

Those skilled in the art can now appreciate from the foregoing description that the broad teachings of the present invention can be implemented in a variety of forms. Therefore, while this invention has been described in connection with, particular examples thereof, the true scope of the invention should not be so limited since other modifications will become apparent to the skilled practitioner upon a study of the drawings, specification, and following claims.

## Claims

1. A method for encrypting a data file content, the method comprising the steps of:
encrypting the data file with a master key;
generating one or more dual-encrypted blocks based on a set of secondary keys, the dual-encrypted blocks contained within the encrypted data file; and
providing the encrypted data file and an attachment file to an authorized user, the attachment file enabling a device to access the data file content once for each secondary key.

2. The method of claim 1 further including the steps of:
randomly generating the master key; and
hiding the master key within a data structure of the attachment file.

3. The method of claim 2 further including the steps of:
creating an odd logarithmic bit integer; and
incrementing the integer by two until a prime number is found;
said prime number defining the master key.

4. The method of claim 2 further including the step of using an NP-hard problem to hide the master key.

5. The method of claim 1 further including the steps of:
selecting one or more continuous blocks to be dual-encrypted;
randomly generating the secondary keys;
generating a duplicate selected block for each secondary key in the set;
generating dual-encrypted blocks based on the duplicate selected blocks and the secondary keys;
inserting the dual-encrypted blocks into the data file.

6. The method of claim 5 further including the steps of:
encrypting the secondary keys with the master key;
formatting the encrypted secondary keys as a data structure; and
storing the data structure in the attachment file.

7. The method of claim 6 further including the steps of:
encrypting a first secondary key with the master key; and
encrypting subsequent secondary keys in the set with all preceding secondary keys in the set.

8. The method of claim 1 further including the steps of:
receiving an email message from the attachment file, the message having a status content unique to the attachment file; and
determining whether another message having the status content has already been received.

9. The method of claim 8 wherein the status content defines a current operational state and an identifier for the attachment file.

10. The method of claim 8 further including the step of storing the status content to a data storage medium.

11. A method for enabling a device to access an encrypted data file content, the method comprising the steps of:
decrypting single-encrypted blocks of the data file with a master key;
decrypting dual-encrypted blocks of the data file with the master key and a secondary key; and
repeating the decryption steps for a set of secondary keys such that the device is able to access the data file content once for each secondary key in the set.

12. The method of claim 11 further including the step of decrypting the blocks on a block-by-block basis such that the device only has access to the data file content one block at a time.

13. The method of claim 12 further including the step of re-encrypting the single-encrypted blocks with a new master key.

14. The method of claim 13 further including the steps of:
randomly generating the new master key; and
hiding the new master key within a data structure.

15. The method of claim 14 further including the steps of:
creating an odd logarithmic bit integer; and
incrementing the integer by two until a prime number is found;
said prime number defining the new master key.

16. The method of claim 14 further including the step of using an NP-hard problem to hide the new master key.

17. The method of claim 12 further including the step of discarding the dual-encrypted blocks after decryption with the secondary keys.

18. The method of claim 11 further including the step of transmitting an email message to a provider of the encrypted data file, the message having a status content.

19. The method of claim 11 further including the step of adding footprint files to a host system, the footprint files enabling detection of copying of the encrypted data file.

20. The method of claim 11 further including the step of adding footprint data to files contained on a host system, the footprint data enabling detection of copying of the encrypted data file.
